# EUROPÄISCHE PATENTSCHRIFT

(11) **EP 1 023 962 B1**
(45) Veröffentlichungstag und Bekanntmachung des Hinweises auf die Patenterteilung: **02.10.2002**
(21) Anmeldenummer: 00101195.6
(22) Anmeldetag: 22.01.2000
(51) Int. Cl.: B23B 27/14

(54) **Schneidwerkzeug mit Mitteln zur Spankontrolle**
Cutting tool with means to control the chip flow
Outil de coupe avec moyen de contrôle de copeaux

(30) Priorität: 26.01.1999 DE 19903037
(43) Veröffentlichungstag der Anmeldung: 02.08.2000
(73) Patentinhaber: Jakob Lach GmbH & Co. KG, 63452 Hanau (DE)
(72) Erfinder: Maurer, Eugen Dipl.-Ing., 61239 Ober-Mörlen (DE)
(74) Vertreter: Jochem, Bernd , Dipl.-Wirtsch.-Ing

(56) Entgegenhaltungen:
- US-A- 2 870 523
- US-A- 4 159 885
- US-A- 4 189 264
- US-A- 4 854 784
- US-A- 5 193 948
- US-A- 5 405 711

## Beschreibung

Die Erfindung befaßt sich mit einem Schneidwerkzeug mit im Bereich der Spanfläche angeordneten Mitteln zur Verhinderung unkontrollierter Spanbildung, die in einem bestimmten Abstand zu einer Schneidkante an einer Schicht aus polykristallinem Diamant (PKD) oder polykristallinem Bornitrid (PKB) angeordnet sind, die auf einem Trägerkörper aufgebracht ist.

Bei der spanabhebenden Bearbeitung von insbesondere zähen Werkstoffen, wie z. B. Nichteisenmetallen oder Kunststoffen, ist man bestrebt, die unkontrollierte Bildung langer Späne zu unterbinden, da diese u. a. die bearbeiteten Oberflächen beschädigen können. Hierzu sind sog. Spanbrecher, welche die Späne auf kurze Länge brechen, und Spanleitstufen bekannt, welche die langen Späne gezielt von dem Arbeitsbereich wegleiten. Da derartige Mittel zur Verhinderung unkontrollierter Spanbildung möglichst nahe an der Schneidkante angeordnet sein sollten, um effektiv arbeiten zu können, ergibt sich bei Schneidwerkzeugen mit Schneidwerkstoffen aus polykristallinem Diamant (PKD) oder polykristallinem Bornitrid (PKB) das Problem, daß die aus diesen Werkstoffen bestehende Schicht die Spanfläche bildet und auf dieser Schicht keine separaten Mittel zuverlässig befestigt werden können. Man behilft sich daher damit, die Schneidwerkzeuge in einem Schlitz eines Werkzeughalters einzulöten, wobei jedoch lediglich eine Lötverbindung zwischen dem Trägerkörper und dem Schlitz möglich ist und zwischen der Oberfläche der Schicht aus PKD bzw. PKB und den Mitteln zur Spankontrolle eine schmale Fuge verbleibt. Es hat sich gezeigt, daß sich Späne in dieser Fuge festsetzen können, wodurch einerseits der Werkzeugträger schnell verschleißt und andererseits Beschädigungen der Werkstoffoberfläche auftreten können. Schneidwerkzeuge mit Mitteln zur Spankontrolle sind aus der US 4,854,784 und der US 5,405,711 bekannt.

Die Aufgabe der Erfindung besteht darin, ein Schneidwerkzeug mit einem Schneidwerkstoff aus PKD bzw. PKB zu schaffen, das Mittel zur Spankontrolle ohne Fuge zur Spanfläche in der Nähe der Schneidkante ermöglicht.

Erfindungsgemäß wird die Aufgabe dadurch gelöst, daß die Schicht aus PKD bzw. PKB im Bereich der Mittel zur Verhinderung unkontrollierter Spanbildung bis auf den Trägerkörper ausgespart und die Mittel zur Verhinderung unkontrollierter Spanbildung dort unmittelbar auf dem Trägerkörper aufgebracht sind.

Das nachträgliche Abtragen der Schicht aus PKD bzw. PKB im Bereich der Aussparung beispielsweise im Wege der Elektroerosion erlaubt eine präzise Annäherung an die Schneidkante auf einen Abstand, der bei der Herstellung der Schicht nicht erreichbar wäre. Die präzise Einhaltung des Abstandes der Mittel zur Verhinderung unkontrollierter Spanbildung von vorzugsweise ungefähr 0,3 bis 1,5 mm führt nicht zu einer Erhöhung der Gefahr von Sprödbrüchen der sehr empfindlichen Schneidwerkstoffe.

Ein weiterer Vorteil der Erfindung besteht darin, daß sich das erfindungsgemäße Schneidwerkzeug auf sehr wirtschaftliche Weise herstellen läßt und auf dem Trägerkörper von der Form her praktisch beliebige Mittel zur Spankontrolle aufgebracht werden können. Da diese in der Nähe der Schneidkante an dem Trägerkörper verankert sind, ergibt sich auch ein sehr fester Halt dieser Mittel, da im Vergleich zu den bisher üblichen Lösungen nur ein sehr geringer Hebelweg zwischen dem Angriffspunkt der Späne und dem Verankerungspunkt der Mittel zur Spankontrollierung an dem Trägerkörper vorliegt. Die Nähe des Verankerungspunktes an der Schneidkante erlaubt daher auch die Ausbildung relativ hoher Spanbrech- oder Spanleitmittel, falls dies gewünscht sein sollte.

Die Stärke der Schicht aus PKD bzw. PKB beträgt vorzugsweise ungefähr 0,3 bis 1,5 mm. Derartige Schichtdicken lassen sich mit den bekannten Herstellungsverfahren für Schneidwerkzeuge erzielen, wobei dünne Schichtdicken den Vorteil bieten, daß der Elektroerosionsvorgang weniger zeitaufwendig ist und damit geringere Kosten verursacht. Besonders günstig für die Ausbildung der Aussparung ist es dabei, wenn die Schicht aus PKD bzw. PKB durch Abscheiden des Schneidwerkstoffes in der Dampfphase auf den Trägerkörper aufgebracht ist, da die auf diese Weise herstellbaren Überzüge, beispielsweise aus Diamant, nur eine geringe Schichtdicke besitzen und daher bei der Bearbeitung elektroerosiv besonders leicht zu durchdringen sind.

Das erfindungsgemäß Schneidwerkzeug kann als Einsatz für einen Halter oder als Wendeschneidplatte mit mehreren Schneidkanten ausgebildet sein.

Die Mittel zur Verhinderung unkontrollierter Spanbildung können allseitig von einem verbleibenden Steg der Schicht aus PKD bzw. PKB umgeben sein. In diesem Fall sind die Kontrollmittel ausschließlich am Trägerkörper des Schneidwerkzeuges befestigt. Je nach Einsatzart kann es auch zweckmässig sein, die Schicht aus PKD bzw. PKB zu einem Rand eines Halters hin vollständig zu entfernen, so daß die Kontrollmittel sowohl mit dem Trägerkörper des Schneidwerkzeuges als auch mit dessen Halter verlötet, verschweißt oder verklebt werden können, um eine zusätzliche Stabilität zu erzeugen.

Vorzugsweise bestehen die Mittel zur Verhinderung unkontrollierter Spanbildung und/oder der Trägerkörper aus Hartmetall oder hochlegiertem Cr-W-Werkzeugstahl (Schnellarbeitsstahl). Besonders ideal ist es, beide Teile aus Hartmetall herzustellen, da dieses gegen Beschädigungen durch die Späne besonders resistent ist und eine gute Verbindung zwischen den Kontrollmitteln und dem Trägerkörper beispielsweise durch Verlöten ermöglichen. Andererseits lassen sich Teile aus Stahl besser verschweißen.

Je nach Einsatzgebiet des Schneidwerkzeuges und des zu zerspanenden Werkstoffes können die Mittel zur Verhinderung unkontrollierter Spanbildung als Spanleitstufe zum Wegführen sich bildender Späne oder als Spanbrecher zum Verkürzen der Späne auf eine unschädliche Länge ausgebildet sein.

Bei der Ausbildung als Spanbrecher steht dieser zweckmäßigerweise 0,5 bis 3,0 mm über die Schicht aus PKD und PKB über und ist an seiner der Schneidkante zugewandten Flanke um ungefähr 40 bis 50° abgeschrägt. Alternativ oder ergänzend zu der Abschrägung kann die der Schneidkante zugewandte Oberkante des Spanbrechers mit einem Radius, beispielsweise von 0,5 mm abgerundet sein.

Es versteht sich, daß das erfindungsgemäße Schneidwerkzeug in allen seinen möglichen Ausführungsformen als Bohr-, Fräs- oder Drehwerkzeug ausgebildet sein kann.

Nachfolgend wird anhand der beigefügten Zeichnungen näher auf Ausführungsbeispiele der Erfindung eingegangen. Es zeigen:
- Fig. 1: eine Draufsicht eines Werkzeuges;
- Fig. 2: einen Längsschnitt des Werkzeuges nach Fig. 1;
- Fig. 3: eine Draufsicht auf ein weiteres Werkzeug mit unterschiedlich ausgebildetem Spanbrecher;
- Fig. 4: einen Längsschnitt des Werkzeuges nach Fig. 3;
- Fig. 5: eine Draufsicht auf eine weitere Ausführungsform eines Werkzeuges mit Spanbrecher;
- Fig. 6: einen Längsschnitt des Werkzeuges nach Fig. 5.

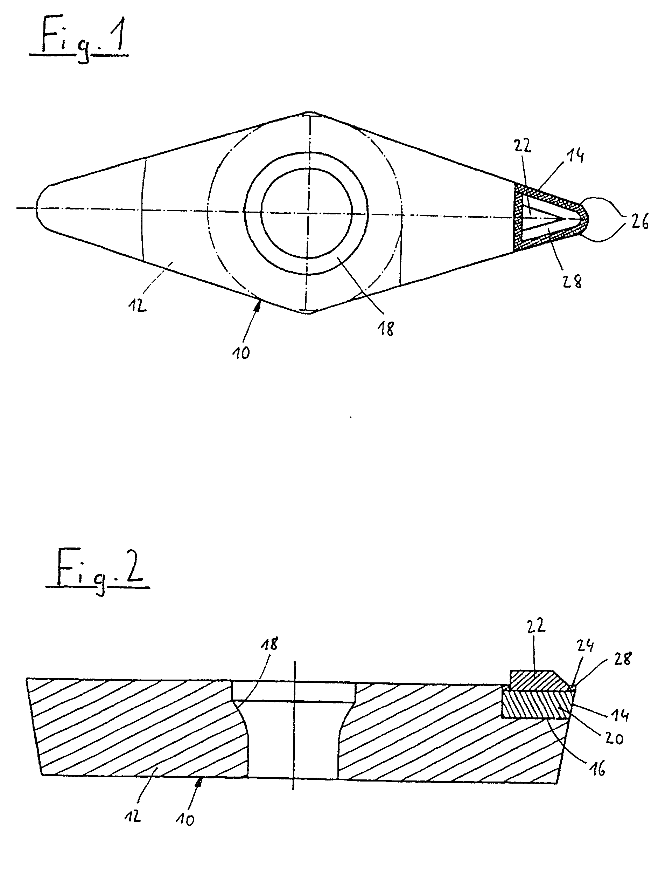

In Fig. 1 ist ein Werkzeug 10 dargestellt, das im wesentlichen aus einem Halter 12 und einem Schneidwerkzeugeinsatz 14 besteht. Der Schneidwerkzeugeinsatz 14 sitzt in einer entsprechend geformten Aussparung 16 an einem Ende des Halters 12, der mittig mit einer Befestigungsbohrung 18 versehen ist, die eine präzise Befestigung des Werkzeuges 10 an einem weiteren Halter (nicht gezeigt) ermöglicht.

Der Schneidwerkzeugeinsatz 14 besteht im wesentlichen aus einem Trägerkörper 20, einem auf diesen aufgelöteten Spanbrecher 22 und einer auf dem Trägerkörper 20 aufgebrachten Schicht 24 aus polykristallinem Diamant (PKD), die sich anschmiegend um den Spanbrecher 22 erstreckt. Sowohl der Trägerkörper 20 als auch der Spanbrecher 22 bestehen aus Hartmetall. Der Trägerkörper 20 ist mit der Aussparung 16 verlötet, so daß der Schneidwerkzeugeinsatz 14 materialschlüssig fest mit dem Halter 12 verbunden ist.

Die Herstellung des Schneidwerkzeugeinsatzes 14 erfolgt in der Weise, daß zunächst auf dem Trägerkörper 20 eine Schicht aus PKD von einer Dicke im vorliegenden Fall von 0,3 mm aufgebracht wird. Neben den herkömmlichen Verfahren ist es auch denkbar, den Diamantwerkstoff durch Abscheidung aus der Dampfphase aufzubringen.

Anschließend wird im Wege des Profilsenkerodierens oder mittels Laser oder eines anderen geigneten Erodier- oder Verdampfungsverfahrens die Schicht im mittleren Bereich bis auf den Trägerkörper 16 entfernt, so daß zwischen dem Spanbrecher 22 und den Schneidkanten 26 des Schneidwerkzeugeinsatzes 14 nur ein Steg von ungefähr 0,3 bis 1,5 mm Breite verbleibt. Auch in dem an der Aussparung 16 anliegenden Bereich verbleibt bei dem Schneidwerkzeugeinsatz 14 ein Steg von 0,4 mm Breite. Anschließend wird der Spanbrecher 22, dessen den Schneidkanten zugewandte Flanken 28 um ungefähr 45° abgeschrägt sind, unmittelbar auf dem Trägerkörper 20 aufgelötet. Das Elektroerodieren erlaubt ein derart präzises Aussparen der PKD-Schicht 24, daß es nicht zu einer wesentlichen Schwächung des Schneidwerkstoffes kommt, so daß keine Gefahr von Sprödbrüchen besteht.

Die Aussparung 16 ist im gezeigten Beispiel so tief ausgebildet, daß die Oberkante der PKD-Schicht 24 bündig mit der Oberfläche des Halters 12 abschließt.

Während des Zerspanungsvorgangs sorgen die in unmittelbarer Nähe der Schnittfläche liegenden Flanken 28 des Spanbrechers 22 dafür, daß sich bildende Späne frühzeitig gebrochen werden und so keine langen Späne entstehen können. Die großflächige Befestigung des Spanbrechers 22 auf dem Trägerkörper 20, die bis in die Nähe der Schneidkanten 26 reicht, sorgt auch für eine gute Krafteinleitung in den Trägerkörper 20 ohne wesentliche Biegemomente. Da die Fuge zwischen dem Spanbrecher 22 und dem verbleibenden PKD-Material nicht in der Bewegungsrichtung der sich bildenden Späne liegt, ist die Gefahr eines Eindringens von Spänen in diese Fuge ausgeschlossen.

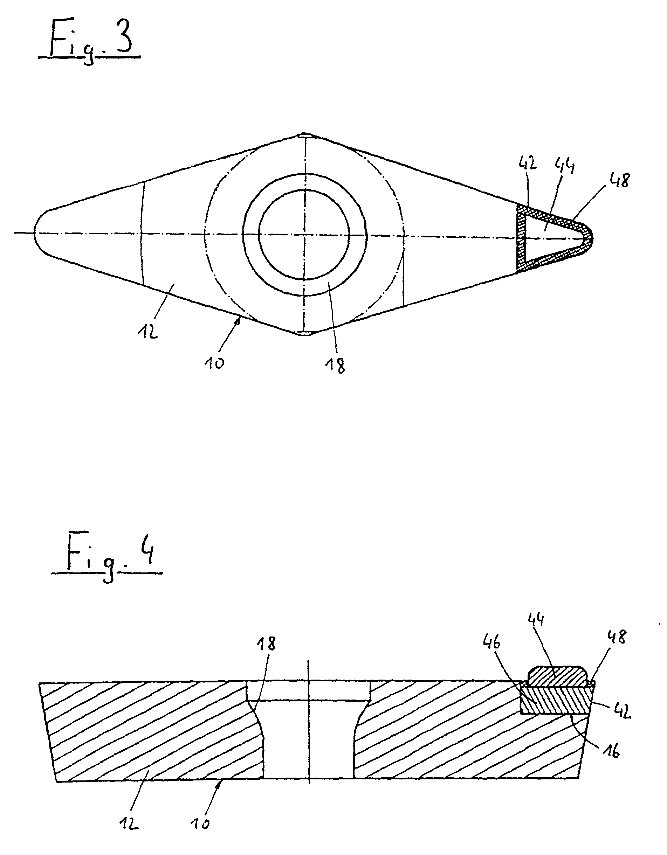

Fig. 3 zeigt ein weiteres Werkzeug 30, dessen Halter 12 dem Halter des in Fig. 1 und 2 dargestellten Werkzeuges 10 entspricht. In der Aussparung 16 ist jedoch ein Schneidwerkzeugeinsatz 42 eingelötet, bei welchem ein Spanbrecher 44 auf dem Trägerkörper 46 aufgelötet ist, dessen Oberkanten mit einem Radius von ungefähr 0,5 mm abgerundet sind. Die PKD-Schicht 48 entspricht in ihren Abmessungen derjenigen des Schneidwerkzeugeinsatzes 14 aus Fig. 1 und 2. Die abgerundeten Kanten des Spanbrechers, der sich ebenso wie bei dem zuvor beschriebenen Ausführungsbeispiel zwischen ungefähr 0,5 bis 1,5 mm über die PKD-Schicht 48 hinaus erstreckt, stellen eine Alternative zu den geneigten Flanken 28 des in Fig. 1 und 2 dargestellten Schneidwerkzeugeinsatzes 14 dar. Trägerkörper 42 und Spanbrecher 44 bestehen wiederum beide aus Hartmetall, um eine gute materialschlüssige Verbindung zwischen den beiden Teilen durch Löten zu erreichen.

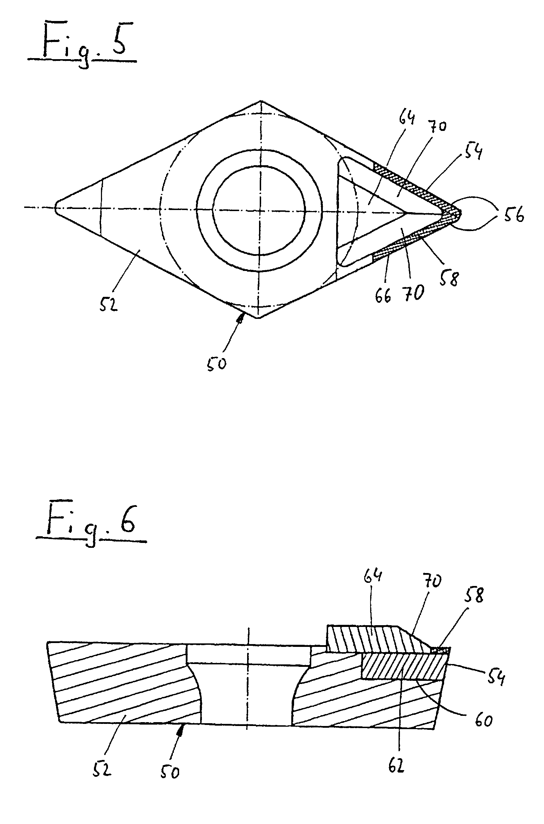

Ein weiteres Ausführungsbeispiel eines Werkzeuges 50 ist in Fig. 5 dargestellt. Dieses Werkzeug 50 besteht aus einem Halter 52 und einem Schneidwerkzeugeinsatz 54, die sich in der Geometrie von den beiden zuvor beschriebenen Werkzeugen 10, 30 unterscheiden. So laufen bei dem Schneidwerkzeugeinsatz 54 die Schneidkanten 56 der PKD-Schicht 58 nicht in einem Winkel von 35° bei einem Spitzenradius von 0,8 mm, sondern unter einem Winkel von 55° mit einem Spitzenradius von 0,4 mm zusammen. Ein weiterer Unterschied zu den zuvor beschriebenen Ausführungsformen besteht darin, daß der Schneidwerkzeugeinsatz in einer stufenförmigen Aussparung 60 in dem Halter 52 eingelötet ist. Die stufenförmige Aussparung 60 ermöglicht es, einen über den Trägerkörper 62 des Schneidwerkzeuges 54 auf der den Schneidkanten 56 abgewandten Seite überstehenden Spanbrecher 64 vorzusehen, der sowohl mit dem Halter 52 als auch mit dem Trägerkörper 62 verlötet ist. Wenn der Spanbrecher 64 aufgeschweißt werden soll, empfiehlt es sich, ihn am hinteren Ende, wo er mit dem Halter 52 zu verschweißen ist, unterseitig mit einem flachen Vorsprung, wie mit einem Stiefelabsatz, auszubilden. Dieser Vorsprung von z. B. etwa 1 bis 2 Zehntel Millimeter Höhe gewährleistet bei einer ebenen Auflagefläche am Träger und Halter einen zuverlässigen und gleichmässigen Andruck gegen den Halter beim Schweißvorgang. Die besondere Ausbildung des Spanbrechers 64 erfordert es, die PKD-Schicht 58 nach dem Aufbringen auf den Trägerkörper 62 bis auf einen verbleibenden V-förmigen Winkel 66 im Bereich der Schneidkanten 56 auszusparen. Der Spanbrecher 64 verfügt wiederum über um etwa 45° abgeschrägte Flanken 70, die den Schneidkanten 56 zum Brechen sich bildender Späne zugewandt sind.

Statt der bei den gezeigten Ausführungsbeispielen vorgesehenen Spanbrecher ist auch das Aufbringen von Spanleitstufen auf den Trägerkörpern der Schneidwerkzeugeinsätze denkbar, deren Aufgabe nicht in einem Brechen der Späne auf kurze Länge, sondern in einem gezielten Ableiten entstehender Späne besteht.

Je nach Anwendungsfall, z. B. insbesondere zum Bearbeiten festerer Werkstoffe, können die auf den Trägerkörpern aufgebrachten Schichten zur Bildung der Schneidkanten auch aus polykristallinem PKB bestehen, das auch als CBN bezeichnet wird.

Selbstverständlich ist es denkbar, die erfindungsgemäße Anordnung von Mitteln zur Kontrollierung der Spanbildung auch auf Vollschichtplatten, wie z. B. Wendeschneidplatten, aufzubringen, bei welchen die separaten Halter entfallen können.

Die Span- und Freiwinkel können unabhängig von der Anordnung der Spanbrecher der jeweilige Einsatzart des Schneidwerkzeuges angepaßt sein. Entsprechend modifizierte Schneidwerkzeugeinsätze eignen sich sowohl zum Einsatz in Bohr-, Fräs- als auch Drehwerkzeugen.

## Patentansprüche

1. Schneidwerkzeug mit im Bereich der Spanfläche angeordneten Mitteln (22; 44; 64) zur Verhinderung unkontrollierter Spanbildung, die in einem bestimmten Abstand zu einer Schneidkante (26; 56) an einer Schicht (24; 48; 58) aus polykristallinem Diamant (PKD) oder polykristallinem Bornitrid (PKB) angeordnet sind, die auf einem Trägerkörper (20; 46; 62) aufgebracht ist, **dadurch gekennzeichnet, daß** die Schicht (24; 46; 58) aus PKD bzw. PKB im Bereich der Mittel (22; 44; 64) zur Verhinderung unkontrollierter Spanbildung bis auf den Trägerkörper (20; 46; 62) ausgespart und die Mittel (22; 44; 64) zur Verhinderung unkontrollierter Spanbildung dort unmittelbar auf dem Trägerkörper (20; 46; 62) aufgebracht sind.

2. Schneidwerkzeug nach Anspruch 1, **dadurch gekennzeichnet, daß** die Mittel (22; 44; 64) zur Verhinderung unkontrollierter Spanbildung materialschlüssig auf dem Trägerkörper (20; 46; 62) oder materialschlüssig sowohl auf dem Trägerkörper (20; 46; 62) als auch auf einem ihn tragenden Halter (12; 52) befestigt sind.

3. Schneidwerkzeug nach Anspruch 2, **dadurch gekennzeichnet, daß** die Mittel (22; 44; 64) zur Verhinderung unkontrollierter Spanbildung auf der Unterseite im hinteren Bereich mit einem flachen Vorsprung mit einer ebenen unteren Fläche versehen sind.

4. Schneidwerkzeug nach einem der Ansprüche 1 bis 3, **dadurch gekennzeichnet, daß** die Aussparung in der Schicht (24; 48; 58) aus PKD bzw. PKB durch ein Erodier- oder Verdampfungsverfahren hergestellt ist.

5. Schneidwerkzeug nach einem der vorhergehenden Ansprüche, **dadurch gekennzeichnet, daß** die Schicht aus PKD bzw. PKB durch Abscheiden des Schneidwerkstoffes in der Dampfphase auf den Trägerkörper aufgebracht ist.

6. Schneidwerkzeug nach einem der vorhergehenden Ansprüche, **dadurch gekennzeichnet, daß** die Mittel zur Verhinderung unkontrollierter Spanbildung als Spanleitstufe ausgebildet sind.

7. Schneidwerkzeug nach einem der Ansprüche 1 bis 6, **dadurch gekennzeichnet, daß** die Mittel zur Verhinderung unkontrollierter Spanbildung als Spanbrecher (22; 44; 64) ausgebildet sind.

8. Schneidwerkzeug nach Anspruch 7, **dadurch gekennzeichnet, daß** die der Schneidkante (26) zugewandte Flanke (28) des Spanbrechers (22) um ungefähr 40 bis 50° abgeschrägt ist.

9. Schneidwerkzeug nach einem der vorhergehenden Ansprüche, **dadurch gekennzeichnet, daß** es als Bohr-, Fräsoder Drehwerkzeug ausgebildet ist.

10. Schneidwerkzeug nach einem der vorhergehenden Ansprüche, **dadurch gekennzeichnet, daß** es als Einsatz (14; 42; 54) für einen Halter (12; 52) oder als Wendeschneidplatte mit mehreren Schneidkanten ausgebildet ist.

## Claims

1. A cutting tool, having means (22; 44; 64), disposed in the region of the chip face, for preventing uncontrolled chip formation, which means are disposed at a certain spacing from a cutting edge (26; 56) at a layer (24; 48; 58) of polycrystalline diamond (PKD) or polycrystalline boron nitride (PKB), which is applied to a substrate body (20; 46; 62), **characterized in that** the layer (24; 46; 58) of PKD or PKB is recessed, in the region of the means (22; 44; 64) for preventing uncontrolled chip formation, down to the substrate body (20; 46; 62), and the means (22; 44; 64) for preventing uncontrolled chip formation are applied there directly to the substrate body (20; 46; 62).

2. The cutting tool of claim 1, **characterized in that** the means (22; 44, 64) for preventing uncontrolled chip formation are secured in materially joined fashion to the substrate body (20; 46; 62) or are secured in materially joined fashion to both the substrate body (20; 46; 62) and to a holder (12; 52) that carries the substrate body.

3. The cutting tool of claim 2, **characterized in that** the means (22; 44, 64) for preventing uncontrolled chip formation are provided on the underside, in the rear region, with a flat protrusion having a flat lower face.

4. The cutting tool of one of claims 1-3, **characterized in that** the recess in the layer (24; 48; 58) of PKD or PKB is produced by an erosion or evaporation method.

5. The cutting tool of one of the foregoing claims, **characterized in that** the layer of PKD or PKB is applied to the substrate body by deposition of the cutting material in the vapor phase.

6. The cutting tool of one of the foregoing claims, **characterized in that** the means for preventing uncontrolled chip formation are embodied as a chip guide stage.

7. The cutting tool of one of claims 1-6, **characterized in that** the means (22; 44, 64) for preventing uncontrolled chip formation are embodied as chip breakers (22; 44; 64).

8. The cutting tool of claim 7, **characterized in that** the flank (28), oriented toward the cutting edge (26), of the chip breaker (22) is beveled by approximately 40-50°.

9. The cutting tool of one of the foregoing claims, **characterized in that** it is embodied as a drilling tool, milling tool or lathe tool.

10. The cutting tool of one of the foregoing claims, **characterized in that** it is embodied as an insert (14; 42; 54) for a holder (12; 52) or as an indexable cutter plate with a plurality of cutting edges.

## Revendications

1. Outil de coupe comportant dans la zone de la face de coupe, pour empêcher la formation incontrôlée de copeaux, des moyens (22, 44, 64) disposés à une certaine distance d'une arête de coupe (26, 56) à une couche (24, 48, 58) de diamant polycristallin (PKD) ou de nitrure de bore (PKB) polycristallin déposée sur un corps porteur (20, 46, 62),
**caractérisé en ce que**
la couche (24, 48, 58) de PKD ou de PKB est jusqu'au corps porteur (20, 46, 62) évidée dans la zone des moyens (22, 44, 64) pour empêcher la formation incontrôlée de copeaux, et ces moyens (22, 44, 64) pour empêcher la formation incontrôlée de copeaux sont à cet endroit déposés directement sur le corps porteur (20, 46, 62).

2. Outil de coupe selon la revendication 1,
**caractérisé en ce que**
les moyens (22, 44, 64) pour empêcher la formation incontrôlée de copeaux sont fixés par liaison des matières sur le corps porteur (20, 46, 62) seul, ou à la fois sur ce corps (20, 46, 62) et sur le support (12, 52) qui le porte.

3. Outil de coupe selon la revendication 2,
**caractérisé en ce que**
les moyens (22, 44, 64) pour empêcher la formation incontrôlée de copeaux sont prévus sur la face inférieure, dans la zone arrière, avec une saillie plate présentant une face inférieure plane.

4. Outil de coupe selon l'une quelconque des revendications 1 à 3,
**caractérisé en ce que**
l'évidement dans la couche (24, 48, 58) de PKD ou de PKB est réalisé par un procédé d'érosion ou de vaporisation.

5. Outil de coupe selon l'une quelconque des revendications précédentes,
**caractérisé en ce que**
la couche en PKD ou PKB est réalisée sur le corps porteur par dépôt du matériau de coupe, pendant la. phase de vaporisation.

6. Outil de coupe selon l'une quelconque des revendications précédentes,
**caractérisé en ce que**
les moyens pour empêcher une formation incontrôlée de copeaux sont constitués par un gradin directeur de copeaux.

7. Outil de coupe selon l'une quelconque des revendications précédentes,
**caractérisé en ce que**
les moyens pour empêcher une formation incontrôlée de copeaux sont constitués par un brise-copeaux (22, 44, 64).

8. Outil de coupe selon la revendication 7,
**caractérisé en ce que**
le flanc (28) du brise-copeaux (22) tourné vers l'arête de coupe (26) présente une pente de 40 à 50° environ.

9. Outil de coupe selon l'une quelconque des revendications précédentes,
**caractérisé en ce que**
cet outil est un outil de perçage, de fraisage ou de tournage.

10. Outil de coupe selon l'une quelconque des revendications précédentes,
**caractérisé en ce qu'**
il est utilisé sous la forme d'insert (14, 42, 54) pour un support (12, 52) ou sous la forme d'une plaquette de coupe retournable, à plusieurs arêtes de coupe.
